(19) Europäisches Patentamt
European Patent Office
Office européen des brevets

(11) EP 0 985 921 B1

(12) EUROPÄISCHE PATENTSCHRIFT

(45) Veröffentlichungstag und Bekanntmachung des Hinweises auf die Patenterteilung:
**05.02.2003 Patentblatt 2003/06**

(51) Int Cl.[7]: **G01N 21/35**

(21) Anmeldenummer: **99117313.9**

(22) Anmeldetag: **03.09.1999**

# (54) Verfahren und Vorrichtung zur Erfassung von Infrarot-Strahlungseigenschaften von Abgasen

Method and device for detecting the infrared radiation properties of exhaust gases

Méthode et dispositif pour détecter les propriétés de rayonnement infrarouge des gaz d'échappement

(84) Benannte Vertragsstaaten:
**DE FR GB IT**

(30) Priorität: **08.09.1998 DE 19840794**

(43) Veröffentlichungstag der Anmeldung:
**15.03.2000 Patentblatt 2000/11**

(73) Patentinhaber: **Deutsches Zentrum für Luft- und Raumfahrt e.V.**
**53175 Bonn (DE)**

(72) Erfinder:
- **Lindermeir, Erwin, Dr.**
  **80333 München (DE)**
- **Tank, Volker, Dr.**
  **82279 Eching (DE)**

(74) Vertreter: **von Kirschbaum, Albrecht, Dipl.-Ing.**
**Patentanwalt**
**Postfach 1520**
**82102 Germering (DE)**

(56) Entgegenhaltungen:
**US-A- 3 696 247**
**US-A- 4 790 652**
**US-A- 5 002 391**
**US-A- 5 551 780**

- **PATENT ABSTRACTS OF JAPAN vol. 1996, no. 05, 31. Mai 1996 (1996-05-31) & JP 08 005547 A (KANSAI ELECTRIC POWER CO INC:THE;OTHERS: 01), 12. Januar 1996 (1996-01-12)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Einrichtung zur Erfassung von Infrarot-Strahlungseigenschaften von Abgasen von Düsentriebwerken oder Turbinen sowie ein Verfahren zum Bestimmen des Transmissionsgrades.

Mit derartigen Abgasuntersuchungen soll die Verteilung der Abgaskomponenten, nämlich Gasen, wie $CO_2$, CO, NO, $NO_2$, $H_2O$, und $SO_2$, u.ä. sowie von unverbrannten Kohlewasserstoffen und Partikeln bzw. Ruß und darüber hinaus auch die Temperaturverteilung quantitativ bestimmt werden. Hieraus können Rückschlüsse auf die Eigenschaft einer Brennkammer, eines Triebwerks und von Verbrennungsprozessen gezogen werden. Aus diesem Grund sind Messungen bei der Entwicklung und Erprobung von neuen Brennkammern sowie Triebwerken von großer Bedeutung. Besonders wichtig hierbei ist, die räumliche Verteilung der Gasparameter und der Temperatur im Abgasstrahl zu ermitteln und nicht nur Mittelwerte oder Werte von einzelnen Stellen im Strahl zu erhalten.

Stand der Technik sind Verfahren, bei welchen entweder Einzelproben oder kontinuierliche Proben genommen werden. Dies erfolgt mittels mechanischer Probensammler, die in den Gasstrahl eingebracht werden. Die Gasproben werden dann in geschlossenen Behältern oder auch über Rohrleitungen Analysegeräten zugeführt.

Ferner sind in DE 43 24 118 A1 ein Verfahren und eine Vorrichtung zur Bestimmung der Emissionsrate mindestens einer Gaskomponente eines Gasgemisches beschrieben. Aus US 5.371,367 ist ein Gerät zum Erfassen und Messen relativer Konzentrationen von Schadstoffen, wie HC, CO und $CO_2$ in den Abgasemissionen von vorbeifahrenden Fahrzeugen bekannt.

Die aus diesem Stand der Technik bekannten Verfahren und Einrichtungen haben folgende Nachteile:

a.) Jede Probennahme ist zeitaufwendig und kostspielig, und zwar insbesondere dann, wenn die Verteilungen mit hoher räumlicher Auflösung gemessen werden müssen.

b.)Der Einfluß der Probennahme auf die Gaszusammensetzung, (wie beispielsweise chemische Reaktionen bis zum Analysegerät, Adsorption u.ä.) muß korrigiert werden, wodurch die Meßunsicherheit erhöht wird.

c.) Eine mechanische Probennahme im Abgasstrahl, nahe an der Austrittsöffnung von Triebwerk oder Brennkammer, hat Rückwirkungen auf das Triebwerk oder die Brennkammer, die unerwünscht und fehlerträchtig sind, im Falle der Brennkammer sogar Gefahren in sich bergen.

Ferner ist aus US 5 002 391 ein Verfahren und ein System zur Gasanalyse bekannt, bei welchem die Absorbtion des Ausgangsstrahles eines $CO_2$-Lasers durch das nachzuweisende Gas mindestens im Bereich eines Absorbtionsmaximums dieses Gases gemessen und mit einem Bezugswert verglichen wird. Hierbei wird der Laser zwischen zwei ihm eigenen Resonanzlinien hin- und hergeschaltet, wobei die eine der Wellenlängen einem Absorbtionsmaximum und die andere einem Absorbtionsminimum des zu detektierenden Gases entspricht. Es wird also die Extinktion und folglich die Gaskonzentration des zu untersuchenden Gases aus dem Verhältnis der Intensitätsabschwächungswerte bei den beiden Wellenlängen hergeleitet. Hierzu werden die Strahlungen der ersten und zweiten Wellenlänge beispielsweise mittels einer Spiegelanordnung aus einer Anzahl von ortsfesten Spiegeln, die entlang der Seiten eines quadratischen Messbereichs angeordnet sind, letztendlich auf eine Anzahl Detektoren und von diesen zu einer Auswerteinheit weitergeleitet.

Des weiteren ist aus US 5 551 780 eine Einrichtung zur Erfassung der Infrarot-Strahlungseigenschaften in Brennkammern bekannt, welche aus zwei Strahlungsdetektoren und einer Referenzstrahlungsquelle zur Messung der Emissions- und Absorptionsspektren von beispielsweise Abgasen besteht. Um die Strahlungseigenschaften in mehreren Dimensionen bestimmen zu können, werden weitere Detektoren oder Detektorpaare parallel oder seitlich versetzt zu den ersten zwei Strahlungsdetektoren angeordnet.

Aufgabe der Erfindung ist es daher, eine alternative Einrichtung zur Erfassung der Infrarot-Strahlungseigenschaften von Abgasen, von Düsentriebwerken oder Turbinen zu schaffen, bei denen die geforderten Parameter berührungslos erfaßt werden, die ferner rückwirkungsfrei, d.h. ohne Beeinflussung der Gaszusammensetzung bzw. der Temperatur arbeitet und ohne Einfluß auf die Vorgänge in einem Triebwerk bzw. in einer Brennkammer technisch verwendbar, d.h. weitgehend automatisiert und daher für den Dauerbetrieb geeignet sind.

Gemäß der Erfindung ist diese Aufgabe durch eine Einrichtung zur Erfassung der Infrarot-Strahlungseigenschaften von Abgasen von Düsentriebwerken oder Turbinen mit den Merkmalen im kennzeichnenden Teil des Anspruchs 1 gelöst. Vorteilhafte Weiterbildungen sind Gegenstand von auf den Anspruch 1 rückbezogenen Ansprüche. Ferner ist ein Verfahren zum Bestimmen des Transmissionsgrades unter Verwendung der erfindungsgemäßen Einrichtung angegeben.

Zur Messung von sowohl Emissions- als auch Transmissionsmessungen werden bekannte Infrarotstrahlungs-Meßverfahren eingesetzt, wie FTIR (Fourier Transform Infrared Spectroscopy), DOAS (Differentielle optische Absorptionsspektroskopie), Thermographie, Laserspektrometrie u.ä.. Hierbei werden die Verfahren einzeln oder in Kombination eingesetzt, beispielsweise FTIR bei Emissions- und Transmissionsmessungen oder die Laserspektrometrie bei Transmissionsmessungen, kombiniert mit Thermografie bei E-mission- und Transmissionsmessungen. Es werden bekannte Spektralbereiche ausgewählt, die vorwiegend im nahen und mittleren Infrarot, d.h. zwischen 0,75 bis 25µm liegen, und in denen die interessierenden Moleküle Strahlung emittieren bzw. absorbieren.

Die Kombination von Emissions- und Transmissionsmessungen führt zu einer sehr flexibel einsetzbaren Meßanordnung. Der Vorteil der Emissionsmessung liegt in der sehr schnellen Durchführbarkeit einer Messung, da es genügt, ein Spektrum aufzunehmen, woraus dann bereits die Gasparameter bestimmt werden können. Der Nachteil der Emissionsmessung liegt in der geringeren Nachweisgrenze im Vergleich zu der aufwendigeren Transmissionsmessung. Diese erfordert, wie unten noch näher ausgeführt wird, im allgemeinen vier (4) Messungen (Spektren).

Insbesondere bei kalten Abgasen von modernen Triebwerken oder bei kleinen Triebwerken (d.h. bei kleinem Durchmesser des Abgasstrahls) oder bei Gasen, die in geringen Konzentrationen auftreten, wie beispielsweise NO und $NO_2$ bei geringer Triebwerksleistung hat die Transmissionsmessung Vorteile.

Die Möglichkeit der simultanen Verwendung von Emissions- und Transmissionsspektren bei der Auswertung der Messungen hat zudem den Vorteil, daß mehr Meßpunkte zur Berechnung der gleichen Anzahl von Parametern zur Verfügung stehen und somit der Einfluß des Meßrauschens verringert werden kann.

Wie bereits in US 6 271 522 B1 oder EP 0 959 341 A1 des Anmelders bezüglich einer quantitativen Analyse von Gasvolumina, insbesondere von Abgasen aus Verbrennungseinrichtungen oder - anlagen mittels Emissions- und Absorptionsspektrum ausgeführt, werden auch die Infrarotstrahlungseigenschaften des Abgasstrahls aus zwei, vorzugsweise zueinander senkrechten Richtungen erfaßt, und zwar in der Weise, daß jeweils nur Teilbereiche eines Abgasstrahls betrachtet werden, die in ihrer Lage und Ausdehnung genau bekannt sind. Der gesamte betrachtete Strahlungsbereich setzt sich aus vielen solcher Teilbereiche zusammen, deren Lage zueinander bekannt ist, die sowohl aneinander angrenzen können als auch definierte Abstände zueinander haben können. Somit wird eine zweidimensionale, sogenannte "2D-Karte" der Infrarotstrahlungseigenschaften des Abgasstrahls erfaßt.

Gemäß der Erfindung werden mehrere solche "2D-Karten" entlang des Abgasstrahls bestimmt und in sogenannte "3D-Karten" der Temperaturverteilung und der Verteilung der interessierenden Gase umgerechnet. Aus mindestens zwei "2D-Karten" der IR-Strahlungseigenschaften entsteht also eine "3D-Karte" der Gasparameter. Die erfindungsgemäße Einrichtung ermöglicht ferner ein schnelles Umschalten von Emissions- auf Transmissionsmessungen und ebenso eine schnelle räumlich aufgelöste Messung der Strahlungseigenschaften des Abgasstrahls in zwei zueinander senkrechten Richtungen.

Nachfolgend wird die Erfindung anhand von bevorzugten Ausführungsformen unter Bezugnahme auf die anliegenden Zeichnungen im einzelnen erläutert. Es zeigen:

| | |
|---|---|
| Fig.1 | schematisch den prinzipiellen Aufbau einer Meßanordnung zur Erfassung von Infrarot-Strahlungseigenschaften; |
| Fig.2 und 3 | die in Fig. 1 dargestellte Meßanordnung während einer Vertikalerfassung bzw. einer Horizontalerfassung der Infrarot-Strahlungseigenschaften; |
| Fig.4 | eine gegenüber Fig.1 abgewandelte Ausführung der Meßanordnung; |
| Fig.5 | im Detail eine Ausführungsform zur Verschiebung einer Spiegelhalterung; |
| Fig.6 | eine schematische Darstellung einer Aufweitung eines "Sichtstrahls" eines Meßgeräts in Verbindung mit einer horizontalen Messung; |
| Fig.7 | eine Abwandlung einer Anordnung zur Strahlführung; |
| Fig.8 | eine schematische Darstellung einer würfelförmigen Rahmenkonstruktion zur Führung der Meßanordnung und |
| Fig.9 | eine schematische Darstellung von Parametern in Verbindung mit der Erfassung eines Transmissionsgrades. |

Wie in Fig.1 dargestellt, weist der prinzipielle Aufbau einer Meßanordnung zwei Infrarotstrahler, vorzugsweise zwei schwarze Strahler 10 oder einen schwarzen Strahler 10 und einen Globar 9 auf, deren Strahlung über eine Spiegelanordnung aus vorzugsweise fünf Spiegeln 1 bis 5 durch einen Abgasstrahl 11 zu einem IR-Meßgerät 6 geleitet wird. Die beiden Strahler 9, 10 sind verschiebbar und können motorgetrieben und ferngesteuert wahlweise vor den Spiegel 1 und damit in den Strahlengang der Spiegelanordnung gebracht werden.

Für die Messung der Strahlungseigenschaften des Abgases mit großem Signal-/Rauschverhältnis ist eine möglichst große Differenz zwischen der maximalen Abgastemperatur im Strahlengang und der Strahlungstemperatur

der Infrarotstrahler notwendig. Aus diesem Grund sollte dann vorzugsweise einer der beiden Strahler, beispielsweise der Schwarze Strahler 10, gekühlt werden. Dies ist insbesondere bei Messungen an modernen Triebwerken mit verhältnismäßig kaltem Abgas vorteilhaft, da deren Temperaturen nur etwa 80K bis 100K über Umgebungstemperatur liegen. Hierbei kann ein Schwarzer Strahler 10 verwendet werden, der beispielsweise mit Hilfe von Peltier-Elementen auf -10 bis -20°C gekühlt wird.

Dabei ist zu beachten, daß an der Oberfläche des Schwarzen Strahlers keine Vereisung entsteht, die durch kondensierenden Wasserdampf aus der Umgebungsluft hervorgerufen wird. Dies kann beispielsweise mittels eines "Stickstoffvorhangs" erreicht werden, durch den die Infrarot-Strahlungseigenschaften nicht verändert werden. Eine Kühlung auf noch tiefere Temperaturen wird mit bekannten Schwarzen Körpern bis auf die Temperatur (77K)von flüssigem Stickstoff realisiert, insbesondere zusammen mit einer nachstehend noch zu beschreibenen Voroptik. Als Alternative hierzu kann der Schwarze Körper auch ohne Kühlung betrieben werden und nimmt dann die Temperatur der Umgebung an. Bei heißem Abgas, etwa ab 450 bis 500K ist dies ausreichend. Ein Betrieb mit einem gekühltem Schwarzem Strahler oder mit einem Schwarzem Strahler auf Umgebungstemperatur ist für die Emissionsmessung vorgesehen.

Der andere Strahler wird beispielsweise elektrisch geheizt. Dieser geheizter Strahler wird verwendet, um Transmissionsmessungen durchzuführen. Zur Erzielung eines möglichst großen Signal-/Rauschverhältnisses sollte die Strahlungstemperatur des Strahlers deutlich über der höchsten Temperatur des Gases im Abgasstrahl 11 liegen. Bei hohen Abgastemperaturen von beispielsweise 600K bis 900K wird daher im Infraroten vorzugsweise ein Globar mit geeigneter Voroptik verwendet.

Für eine Emissionsmessung sowie für eine Transmissionsmessung werden die beiden in den Fig.2 und 3 dargestellten Strahlengänge der aus den Spiegeln 1 bis 5 gebildeten Spiegelanordnung eingestellt. Für vertikale Strahlengänge durch den Abgasstrahl 11 sind die Spiegel 4 und 3 in den in Fig.2 dargestellten Positionen fixiert. Der Spiegel 2 wird nicht benötigt. Die Spiegel 1 und 5 werden synchron zueinander schrittweise in horizontaler Richtung so bewegt, daß der Strahlenverlauf zwischen den Spiegeln 1 und 5 von Schritt zu Schritt, vom rechten zum linken oder vom linken zum rechten Rand der Abgasstrahls 11 geführt wird.

Der Strahlengang verläuft also von dem Schwarzen Strahler 10 bzw. dem Globar 9 über den Spiegel 1 zum Spiegel 5, von diesem zu den ortsfesten Spiegeln 3 und 4 und von diesen zum IR-Meßgerät 6.

Die Spiegel 1 und 5 werden schrittweise synchron bewegt und stehen während der jeweiligen Messung still. Die Schrittweite der Bewegung ist durch die geforderte räumliche Auflösung der Messungen vorgegeben. Werden beispielsweise Meßpunkte in einem Raster von 5cm gefordert, so werden die Spiegel 1 und 5 in Schritten von 5cm verfahren. Selbstverständlich sind auch die Größe der Spiegel 1 bis 5, die des Schwarzen Strahlers 10 bzw. die der Anpassungsoptik des Globars 9 und der Apertur und des Gesichtsfeldwinkels des jeweiligen IR Meßgeräts 6 an die Größe des Abgasstrahls und die geforderte räumliche Auflösung anzupassen.

So liegt beispielsweise der Durchmesser des Abgasstrahls am Düsenaustritt üblicher Triebwerke großer Verkehrsflugzeuge zwischen etwa 100cm und 150cm; die geforderten Abstände der Meßpunkte betragen 5cm, mit einer Tendenz zu 2cm. Dann müssen selbstverständlich auch die Spiegel in Schritten von 5cm ( bis zu 2cm) geführt werden und es werden daher 20 bis 30 Meßpunkte aufgenommen.

Für horizontale Strahlengänge durch den Abgasstrahl 11 befinden sich die Spiegel 4 und 1 in den in Fig.3 dargestellten, fest vorgegebenen Positionen, während die Spiegel 2 und 3 in analoger Weise bewegt werden wie die Spiegel 1 und 5 für die vertikale Erfassung. Für die horizontale Messung gilt ansonsten dasselbe wie für den vertikalen Strahlenverlauf.

Bei der horizontalen Messung verläuft der optische Strahl von dem Schwarzen Strahler 10 bzw. dem Globar 9 über die Spiegel 1 und 2 zum Spiegel 3 und über den Spiegel 4 zum IR-Meßgerät 6. Der Spiegel 5 wird bei der horizontalen Messung nicht benötigt.

In beiden Meßmoden ist der Spiegel 4 ortsfest, d.h. er braucht nicht bewegbar ausgeführt zu werden. Da der Spiegel 5 nur bei der horizontalen Erfassung und der Spiegel 2 nur bei der vertikalen Erfassung verwendet werden, sind in einer bevorzugten Weiterbildung der Erfindung diese beiden Spiegel zu einem Spiegel 21 zusammengefaßt, der von der bei der vertikalen Erfassung benötigten Position in die bei der horizontalen Erfassung benötigte Position über eine Kurvenbahn 8 gebracht werden kann. (Fig.4)

Die gleichzeitige Bewegung der Spiegel 1 und 5 bzw. 2 und 3 erfolgt vorzugsweise mittels jeweils eine Gewindestange 14 antreibenden Schrittmotoren. Eine bevorzugte Aufhängung der beweglichen Spiegel ist in Fig. 5 dargestellt. Jede Spiegelhalterung 12 ist mit einer Gewindestange 14 gekoppelt. Auf Schienen 13 laufende Rollen 15 verhindern ein seitliches Verkippen der in der Spiegelhalterung 12 gehalterten Spiegel während einer Bewegung. Die Schienen 13 sind an einem Rahmen 7 7 angebracht, der zudem ein Verschmutzen der Gewindestangen 14 verhindert. Die verbleibende Öffnung ist beispielsweise mittels Kunststoffmatten 16 abgedeckt. Den beispielsweise vier Spiegeln werden vier gleiche Schrittmotoren zugeordnet. Hierbei werden die den Spiegeln 2, 3 bzw. 1, 5 zugeordneten Motoren jeweils von gleichen Signalen angesteuert, wodurch ein paralleles Verfahren der Spiegel erreicht ist.

Bei der Auslegung der Optik, d.h. der Festlegung von Spiegelgröße, Gesichtsfeldern und Aperturen des

Meßgeräts und der Strahler, ist zu beachten, daß zum einen das Gesichtsfeld des Meßgeräts voll von der Strahlung der beiden verwendeten Strahler ausgefüllt wird, und zum anderen die gewünschte räumliche Auflösung der vorstehend erwähnten "2D- bzw. 3D-Karten" gewährleistet ist. Fig.6 zeigt für die horizontale Messung die Aufweitung des "Sichtstrahls" des Meßgeräts, d.h. des Strahls, der aus dem Bereich kommt, aus welchem das Meßgerät Strahlung empfängt.

Zur Erfüllung der Bedingung bezüglich der Dimensionierung des Gesichtsfelds gilt dann:

$$d_4 = d_M + 2l_{4M}\tan\alpha$$

$$d_3 = d_4 + 2l_{34}\tan\alpha$$

$$d_2 = d_3 + 2l_{23}\tan\alpha$$

$$d_1 = d_2 + 2l_{12}\tan\alpha$$

$$d_s = d_1 + 2l_{S1}\tan\alpha$$

Hierbei sind mit $d_M$ der Durchmesser der als kreisförmig angenommenen Apertur des Meßgeräts, mit $\alpha$ dessen (halber) Öffnungswinkel, mit $l_{s1}$ der Abstand zwischen Strahler und Spiegel 1, mit $l_{12}$ der Abstand zwischen den Spiegeln 1 und 2, mit $l_{23}$ der Abstand zwischen den Spiegeln 2 und 3, mit $l_{34}$ der Abstand zwischen den Spiegeln 3 und 4, mit $l_M$ der Abstand zwischen Spiegel 4 und dem Meßgerät und mit $d_i$(i=1....4,S) der Durchmesser des Sichtstrahls bei den Spiegeln bzw. den Strahlern bezeichnet.

Da der Sichtstrahl unter 45° auf die Spiegel trifft, muß die freie Spiegelfläche mindestens eine Ellipse sein, deren eine Achse gleich dem Durchmesser $d_i$(i=1....4) und deren andere Achse gleich dem $\sqrt{2}$-fachen dieses Durchmessers beträgt. Für die Abstände $l_{34}$ und $l_{12}$ sind dabei die Maximalwerte einzusetzen. Mit $d_s$ ist die minimal notwendige Apertur der Strahler gegeben. Um das Gesichtsfeld des Spektrometers voll auszufüllen, müssen die Strahler eine Strahldivergenz $\geq \alpha$ (Halbwinkel) aufweisen.

Aufgrund der vom laufenden Triebwerk verursachten Vibrationen ist mit leichten Dejustagen während des Betriebs zu rechnen. Daher sind in der Praxis die oben angegebenen minmalen freien Spiegelflächen bzw. Strahleraperturen entsprechend der jeweiligen Prüfstand/Trieb-werkskombination zu vergrößern. Für die vertikale Messung gelten die analogen Überlegungen.

Zur Gewährleistung der örtlichen Auflösung des Verfahrens dürfen sich die Volumina, aus denen in den horizontalen bzw. in den vertikalen Spiegelstellungen Strahlung zum Detektor des Meßgerätes gelangt, nicht überlappen. Unter der Annahme, daß der Spiegel 2 nicht weit vom Abgas entfernt ist, definiert der Durchmesser $d_2$ die Ortsauflösung, wobei für $l_{34}$ wieder der Maximalwert einzusetzen ist. Diese hängt also ab vom Meßgerät ($d_M$ und $\alpha$) und den Abständen $l_{4M}$, $l_{34}$ und $l_{23}$. Für die vertikale Messung gelten analoge Überlegungen.

Alternativ ist aber auch ein Betrieb möglich, bei dem sich die betrachteten Volumina überlappen oder auch einstellbare Abstände (ohne Überlappung oder Berührung) zueinander haben. Dann ist zwar die örtliche Auflösung nicht mehr gewährleistet, aber bei Überlappung werden mehr Meßwerte gewonnen, bei größeren Abständen wird die Meßzeit verringert.

Anstelle einer Verschiebung der beiden Strahler 9 und 10 können beide auch ortsfest angeordnet sein und ihre Strahlung kann über einen klappbaren Planspiegel 17 alternativ in den Strahlengang gebracht werden. Bevorzugt werden Strahler mit kleinen Aperturen verwendet, deren Strahlung mit Hilfe einer geeigneten Optik so abgebildet wird, daß das Gesichtsfeld des Meßgerätes voll ausgefüllt wird.

Die Verwendung kleiner Aperturen hat folgende Vorteile. Die Temperaturhomogenität der strahlenden Oberfläche ist besser bzw. einfacher zu erreichen, je kleiner diese Fläche ist. Der nötige Energieaufwand für die Heizung bzw. Kühlung ist geringer. Die Strahler können schnell auf Betriebstemperatur gebracht werden. Als Schwarze Strahler können Hohlraumstrahler kompakter Bauform verwendet werden, die im allgemeinen einen höheren Emissionsgrad aufweisen als Flächenstrahler. Die strahlenden Flächen lassen sich leichter vor Verschmutzung schützen.

Eine solche Anordnung in Fig.7 zeigt die beiden Strahler bzw. Schwarzer Körper 10 und Globar 9, deren Strahlung mittels des klappbaren Planspiegels 17 in den Focus eines Offaxis-Parabolspiegels 18 gebracht werden. Bei anderen Ausführungsformen, bei denen beispielsweise Linsen verwendet sind, ist aber darauf zu achten, daß die beabsichtigten Effekte (geringe Strahlungsleistung der kalten Quelle, hohe Strahlungsleistung der heißen Quelle) nicht

durch die realen Eigenschaften der Optik (d.h. nicht-ideale Transmissions-/Reflexions- bzw. Emissionsgrade) verloren gehen.

Der beschriebene aus Abschnitten 71 bis 74 gebildete Rahmen 7 (siehe Fig.1 bis 4) ist so, wie in Fig.8 dargestellt, in eine würfelförmige Rahmenkonstruktion 70 eingebaut, so daß der Rahmen 7 entlang des Abgasstrahls 11 verfahrbar ist. Die würfelformige Rahmenkonstruktion 70 ist gegenüber den vom Triebwerk erzeugten Vibrationen geschützt, beispielsweise durch sogenannte Schock-Mounts, entsprechend ausgelegten Feder/Dämpfer-Systemen, u.ä. Vorzugsweise sind das bzw. die Meßgeräte sowie die Strahler 9 und 10 mechanisch starr mit dem Rahmen 70 verbunden. Auf diese Weise ist eine Dejustage von Meßgerät, Spiegeln und Strahlern vermieden.

Bei einer vereinfachten, näherungsweisen Bestimmung des Transmissionsgrades wird folgendes vorausgesetzt:

Der spektrale Transmissionsgrad der Atmosphäre in den betrachteten Spektralbereichen ist näherungsweise 1. Dies gilt beispielsweise für den Spektralbereich 2050-2240 $cm^{-1}$, in dem Emissionslinien von CO auftreten.

Die vom Abgas emittierte spektrale Strahldichte ist in dem zu untersuchenden Spektralbereich deutlich geringer als die spektrale Strahldichte des heißen Strahlers. (Dies ist durch Simulationsrechungen überprüfbar.)

Zunächst wird das Spektrum des heißen Strahlers ohne Abgas (d.h. bei abgeschaltetem Triebwerk) gemessen. Es wird das Spektrum $L_H(\tilde{\nu})$ erhalten, wobei $\tilde{\nu}$ für die Wellenzahl steht. Anschließend werden Spektren bei laufendem Triebwerk aufgenommen, wobei, wie oben ausgeführt, die Spiegel 1 und 5 bzw. 2 und 3 verfahren werden. Es werden $N$ Spektren $L_i(\tilde{\nu})$, $i=1....N$ erhalten, wobei der Index i die Ortsabhängigkeit kennzeichnet. Für jede Spiegelposition wird der Transmissionsgrad des Abgases dann durch Verhältnisbildung $\tau_i(\tilde{\nu})=L_i(\tilde{\nu})/L_H(\tilde{\nu})$ bestimmt.

Da in dieser Formel die Eigenemission des Abgases nicht berücksichtigt ist und dies daher bei hohen Abgastemperaturen bzw. hohen Konzentrationen zu Fehlern führt, wird der Transmissionsgrad des Abgases vorzugsweise aus vier gemessenen Spektren bestimmt.

Bei ausgeschaltetem Triebwerk werden Spekten des heißen und des kalten Strahlers aufgenommen. Unter Berücksichtigung des ortsabhängigen Transmissionsgrades $\tau_{atm,i}$ des Teils der Atmosphäre, die später durch das Abgas ersetzt wird, werden die beiden Spektren $L_{KA,i}$ und $L_{HA,i}$ erhalten:

$$L_{KA,i}(\tilde{\nu}) = \tau_{atm,i}(\tilde{\nu}) L_K(\tilde{\nu})$$

$$L_{HA,i}(\tilde{\nu}) = \tau_{atm,i}(\tilde{\nu}) L_H(\tilde{\nu})$$

Dann werden bei jeder Spiegelposition Spektren der beiden Strahler bei laufendem Triebwerk gemessen.

$$L_{KT,i}(\tilde{\nu}) = \tau_{G,i}(\tilde{\nu}) L_K(\tilde{\nu}) + L_{G,i}(\tilde{\nu})$$

$$L_{HT,i}(\tilde{\nu}) = \tau_{G,i}(\tilde{\nu}) L_H(\tilde{\nu}) + L_{G,i}(\tilde{\nu})$$

wobei mit $\tau_{G,i}(\tilde{\nu})$ der Transmissionsgrad des Abgases und mit $L_{G,i}(\tilde{\nu})$ die vom Abgas emittierte spektrale Strahldichte bei Spiegelposition $i$ bezeichnet sind.

Die Verhältnisbildung

$$\frac{L_{HT,i}(\tilde{\nu}) - L_{KT,i}(\tilde{\nu})}{L_{HA,i}(\tilde{\nu}) - L_{KA,i}(\tilde{\nu})} = \frac{\tau_{G,i}(\tilde{\nu})}{\tau_{atm,i}(\tilde{\nu})} = T_i(\tilde{\nu})$$

ergibt den Transmissionsgrad des Abgases für Spiegelposition $i$ dividiert durch den Transmissionsgrad der Atmosphäre

für die Spiegelposition *i*. Dieser wird entweder gemessen, oder auf der Grundlage von Messungen (Umgebungsdruck, -temperatur, $H_2O$ und $CO_2$) modelliert, oder mit Hilfe der Daten einer Standardatmosphäre modelliert.

Bei einer bevorzugten Spektrenauswertung werden zur Ermittlung der Abgasparameter direkt die Verhältnisse der Transmissionsgrade $T_i(\tilde{\nu})$ verwendet und neben den Abgasparametern werden mittels geeigneter Rechenverfahren, wie sie beispielsweise in der Patentanameldung P 198 21 956.3 angegeben sind, auch die oben genannten Atmosphärenparameter aus den Spektren $T_i(\tilde{\nu})$ ermittelt.

Die Auswertung der Spektren erfolgt mit Hilfe der Ausgleichsrechnung (least squares fit). Dabei werden zur Bestimmung der verschiedenen Gasparameter mehrere Rechnungen durchgeführt, die sich in dem jeweils betrachteten Spektralbereich unterscheiden. Bevorzugt werden aber alle gemessenen Spektren (d.h. die Transmissionsspektren $T_i(\tilde{\nu})$ und die Emissionsspektren $L_i(\tilde{\nu})$ simultan in einer Ausgleichsrechnung verwendet. So wird ein möglichst großer Mittelungseffekt erzielt.

Zur Berechnung der örtlichen Verteilungen der Abgasparameter müssen die Meßwerte als Funktionen dieser Parameter analytisch gegeben sein. Dabei wird angenommen, daß auf allen Strecken, auf denen die Atmosphäre das Meßsignal beeinflußt, die gleichen Atmosphärenbedingungen (Druck, Temperatur, Spurengaskonzentrationen) gelten.

Die räumliche Verteilung der Abgasparameter werden in geeigeter Weise parametrisiert. Es können beispielsweise (zweidimensionale) Gaußsche Funktionen angenommen werden oder die Funktionen werden in Form von Reihenentwicklungen (z.B. radiale Basisfunktionen) dargestellt. Die Parametrisierung erfolgt z.B. mit einem karthesischen Koordinatensystem im Zentrum des Abgasstrahls mit den Koordinaten x und y. Die Abgasparameter werden dann als Funktionen dieser beiden Koodinaten angegeben: Druck (p(x,y)), Temperatur (T(x,y) und Teilchendichten ($n_m$(x,y) (m=1, ....,M) der M interessierenden Gasspezies.

Zur Berechnung von Strahldichte und Transmissiongrad des Abgases sind zunächst die Gasparameter entlang des jeweiligen Sichtstrahls des Meßgerätes ermittelt. Für jede Spiegelposition *i* führt dies zu eindimensionalen Funktionen $p(s_i)$, $T(s_i)$ und $n_m(s_i)$. In Fig.9 sind die Verhältnisse verdeutlicht. Für den Transmissionsgrad wird dann erhalten:

$$\tau_{G,i}(\tilde{\nu}) = \exp\left[-\int_0^{s_{i,max}} \sum_{m=1}^{M} a_m(T(s_i), p(s_i))\, n_m(s_i)\, ds_i\right]$$

wobei mit $a_m$ der Absorptionskoeffizient und mit n*m* die Teilchendichte (Konzentration) des Gases *m* bezeichnet sind und die Summation über alle *M* infrarotaktiven (und zu messenden) Gase des Abgases erfolgt.

Für die spektrale Strahldichte erhält man

$$L_{G,i}(\tilde{\nu}) = \int_0^{s_{i,max}} \sum_{m=1}^{M} [a_m(T(s_i), p(s_i))\, n_m(s_i)]\, B(T(s_i))\, \tau_{G,i}(\tilde{\nu}, s_i)\, ds_i$$

mit

$$\tau(\tilde{\nu}, s) = \exp\left[-\int_0^{s_i} \sum_{m=1}^{M} a_m(T(s_i'), p(s_i'))\, n_m(s_i')\, ds_i'\right]_{s}$$

und $B(T(s_i))$ der Strahldichte eines Schwarzen Körpers mit der Temperatur $(T(s_i)$.

Obige Formeln setzen voraus, daß für die jeweils betrachtete Spiegelstellung und den daraus resultierenden Durchmesser des Sichtstrahls im Abgas, die Abgasparameter als konstant angesehen werden können. Ist dies nicht der Fall, muß auf Grundlage obiger Formeln der jeweilige Mittelwert über der Apertur des Meßgerätes ermittelt werden.

Bei der Transmissionsmessung werden, wie oben ausgeführt, im allgemeinen die Verhältnisse $\tau_{G,i}(\tilde{\nu})/\tau_{atm}(\tilde{\nu})$ gemessen.. $\tau_{atm}(\tilde{\nu})$ wird berechnet mit Hilfe des Lambert-Beerschen Gesetzes:

$$\tau_{atm}(\tilde{\nu}) = \exp\left[\sum_m (a_m(T_{atm}, p_{atm})n_m)l_a\right]$$

wobei die Summation über alle infrarotaktiven Gase der Atmosphäre erfolgt (meist nur Wasser und Kohlendioxid) und mit $l_a$ die Länge des Weges der Strahlung durch die Atmosphäre bezeichnet ist.

Bei der Emissionsmessung ergibt sich ein Meßsignal nach, wobei der Index *i* für die jeweilige Spiegelposition weggelassen ist:

$$L_i(\tilde{\nu}) = L_{AM} + \tau_{AM}[L_G + \tau_G(L_{AS} + \tau_{AS}L_S)]$$

wobei mit $L_{AM}$ der spektralen Strahldichte, die von der Atmosphäre zwischen dem Meßgerät und dem Abgas emittiert wird, mit $\tau_{AM}$ deren Transmissionsgrad, mit $L_{AS}$ bzw $\tau_{AS}$ die spektrale Strahldichte bzw. der Transmissionsgrad der Atmosphäre zwischen Abgas und Strahler und mit $L_S$ die von dem jeweiligen Strahler (Schwarzer Körper, Globar) emittierte Strahldichte bezeichnet sind.

**Patentansprüche**

1. Einrichtung zur Erfassung der Infrarot-Strahlungseigenschaften von Abgasen von Düsentriebwerken oder Turbinen, indem in kurzen zeitlichen Abständen sowohl Emissions- als auch Transmissionsmessungen durchgeführt werden, mit einer senkrecht zur Achse des Abgasstrahls ausgerichteten Spiegelanordnung aus einer Anzahl Spiegel (1 bis 5), **dadurch gekennzeichnet, daß** zwei Schwarze Strahler (10) oder ein Schwarzer Strahler (10) und ein Globar (9) vorgesehen sind, von welchen der eine für Emissionsmessungen auf eine unter Umgebungstemperatur liegende Temperatur gekühlt ist oder auf Umgebungstemperatur gehalten ist, und der andere für Transmissionsmessungen auf eine über der Temperatur der Abgase liegende Temperatur geheizt ist,
die Spiegel (1 bis 5), die in einem Rahmen (7, 71 bis 74) angeordnet sind, sowohl vertikal als auch horizontal in einstellbaren und definierten Positionen mittels Schrittmotoren schrittweise in einer Ebene senkrecht zur Achse des Abgasstrahl bewegbar sind, wobei mit Hilfe der Spiegel (1 bis 5) die Strahlung der Schwarzen Strahler (10) bzw. eines Schwarzen Strahlers (10) und des Globars (9) durch das Abgas geleitet wird,
der in einer Rahmenkonstruktion (70) untergebrachte Rahmen (7, 71 bis 74) mit den in diesem angeordneten Spiegeln (1 bis 5) entlang der Achse des Abgasstrahls (11) bewegbar ist, und
ein Infrarot-Meßgerät (6) vorgesehen ist, dem sowohl die Strahlung der Schwarzen Strahler (10) bzw. eines Schwarzen Strahlers (10) und des Globars (9) als auch die von dem Abgas emittierte Strahlung zugeführt werden.

2. Einrichtung nach Anspruch 1, **dadurch gekennzeichnet, dass** bei einer Vertikalerfassung der Strahlung zwei Spiegel (3,4) in dem Rahmen (7) ortsfest angeordnet sind und zwei Spiegel (1,5)synchron schrittweise mittels der Schrittmotoren entlang horizontal verlaufenden Rahmenabschnitten (71, 73) bewegt sind, so dass die von den zwei Schwarzen Strahlern oder dem Schwarzen Strahler (10) und dem Globar (9) ausgehende Strahlung von einem Rand des Abgasstrahls (11) bis zu dessen anderen Rand über die synchron bewegten Spiegel (1,5) sowie über die ortsfest angeordneten Spiegel (3,4) zum Infrarot-Meßgerät (6) geführt ist.

3. Einrichtung nach Anspruch 1, **dadurch gekennzeichnet, dass** bei einer Horizontalerfassung der Strahlung zwei Spiegel (1,4) in dem Rahmen (7) ortsfest angeordnet sind, und zwei Spiegel (2,3) synchron mittels der Schrittmotoren schrittweise entlang vertikal verlaufenden Rahmenabschnitten (72, 74) bewegt sind, so dass die von den zwei Schwarzen Strahlern oder dem Schwarzen Strahler (10) und dem Globar (9) ausgehende Strahlung von einem Rand des Abgasstrahls (11) bis zu dessen anderen Rand über den ersten ortsfesten Spiegel (1), den synchron bewegten Spiegel (2,3) und den zweiten ortsfesten Spiegel (4) geführt ist.

4. Einrichtung nach einem der Ansprüche 1 bis 3, **dadurch gekennzeichnet, dass** ein Spiegel (21) der Spiegelanordnung entlang einer einen horizontal verlaufenden Rahmenabschnitt (73) mit einem vertikal verlaufenden Rahmenabschnitt (72) verbindenden Kurvenbahn (8) bewegbar ist.

**5.** Einrichtung nach einem der Ansprüche 1 bis 4, **dadurch gekennzeichnet, dass** die Schwarzen Strahler oder der Schwarze Strahler (10) und der Globar (9) ortsfest und ein klappbarer Planspiegel (17) sowie ein Parabolspiegel (18) so angeordnet sind, dass in der einen Stellung des Planspiegels (17) die Strahlung des einen Schwarzen Strahlers (10) und in der anderen Stellung des Planspiegels (17) die Strahlung des anderen Schwarzen Strahlers oder des Globars (9) in den Strahlengang gelenkt wird.

**6.** Einrichtung nach einem der Ansprüche 1 bis 5, **dadurch gekennzeichnet, dass** das Infrarot-Meßgerät (6), die Spiegelanordnung (1 bis 5) und die Strahler (9, 10) mechanisch starr mit dem Rahmen (7) verbunden sind.

**7.** Verfahren zum Bestimmen des Transmissionsgrades unter Verwendung der Einrichtung nach den Ansprüchen 1 bis 6, **dadurch gekennzeichnet, dass** bei abgeschaltetem Triebwerk die Spektren $L_{KA}(\tilde{\nu})$ und $L_{HA}(\tilde{\nu})$ eines kalten sowie eines heißen Strahlers aufgenommen werden, aus welchen die zum Bestimmen von ortsabhängigen Spektren $L_{KA,i}(\tilde{\nu})$ und $L_{HA,i}(\tilde{\nu})$ benötigten Parameter, wie Druck, Temperatur, Spurengas-Konzentrationen sowie bei Schwarzen Strahlern auch deren Strahlungstemperatur berechnet werden,
anschließend bei laufendem Triebwerk die Spektren des kalten und heißen Strahlers an verschiedenen Positionen *(i)* gemessen werden, der Transmissionsgrad $T_i(\tilde{\nu})$ durch Verhältnisbildung

$$T_i(\tilde{\nu}) = \frac{L_{HT,i}(\tilde{\nu}) - L_{KT,i}(\tilde{\nu})}{L_{HA,i}(\tilde{\nu}) - L_{KA,i}(\tilde{\nu})} = \frac{\tau_{G,i}(\tilde{\nu})}{\tau_{atm,i}(\tilde{\nu})}$$

ermittelt wird und daraus die Abgasparameter, Temperatur, Druck, Spurengas-Konzentrationen bestimmt werden, wobei bezeichnen: $L_{KA,i}(\tilde{\nu})$ und $L_{HA,i}(\tilde{\nu})$ die spektralen Strahldichten des kalten Strahlers K sowie des heißen Strahlers H bei abgeschaltetem Triebwerk (A), $L_{KT,i}(\tilde{\nu})$ und $L_{HT,i}(\tilde{\nu})$ die spektralen Strahldichten des Abgases bei eingeschaltetem Triebwerk *(T)*, $\tilde{\nu}$ die Wellenzahl, $\tau_{atm,i}(\tilde{\nu})$ den Transmissionsgrad des einen Teils der Atmosphäre (atm), $\tau_{G,i}(\tilde{\nu})$ den Transmissionsgrad des Abgases (G), und *i* die Ortsabhängigkeit oder eine ortsabhängige Spiegelposition.

## Claims

**1.** A means for detecting the infrared radiation properties of jet engine or turbine exhaust gases by implementing measurement of both emission and transmission in short time intervals with an array of mirrors oriented perpendicular to the axis of the exhaust stream, having a number of mirrors (1 to 5) **characterized in that**
two blackbody radiators (10) or a blackbody radiator (10) and a Globar radiator (9) are provided, the one of which for emission measurements is cooled to a temperature below ambient temperature or maintained at ambient temperature and the other of which for transmission measurements is heated to a temperature higher than the temperature of the exhaust gases,
the mirrors (1 to 5) arranged in a frame (7, 71 to 74) are movable incrementally both vertically and horizontally in adjustable and defined positions by means of stepper motors in a plane perpendicular to the axis of the exhaust stream; with the aid of the mirrors (1 to 5), the radiation of the blackbody radiators (10) or of a blackbody radiator (10) and of the Globar radiator (9) being directed through the exhaust gases,
the frame (7, 71 to 74) accommodated in a frame structure (70) with the mirrors (1 to 5) arranged therein is movable along the axis of the exhaust stream (11), and
an infrared measuring instrument (6) is provided for receiving both the radiation of the blackbody radiators (10) or of a blackbody radiator (10) and of the Globar radiator (9) and the radiation emitted by the exhaust gases.

**2.** The means as set forth in claim 1, **characterized in that** in vertical detection of the radiation two mirrors (3, 4) are stationary arranged in the frame (7) and two mirrors (1, 5) are moved incrementally in synchronism by means of the stepper motors along the horizontally oriented frame sections (71, 73), so that the radiation emitted by the two blackbody radiators or by the blackbody radiator (10) and by the Globar radiator (9) is guided from the one edge of the exhaust stream (11) to the other edge thereof via the mirrors (1, 5) moved in synchronism as well as via the immovably arranged mirrors (3, 4) to the infrared measuring instrument (6).

**3.** The means as set forth in claim 1, **characterized in that** in horizontal detection of the radiation two mirrors (1, 4) are immovably arranged in the frame (7) and two mirrors (2, 3) are moved incrementally in synchronism by means

of the stepper motors along the vertically oriented frame sections (72,74), so that the radiation emitted by the two blackbody radiators or by the blackbody radiator (10) and by the Globar radiator (9) is guided from the one edge of the exhaust stream (11) to the other edge thereof via the first immovable mirror (1) the mirror (2, 3) moved in synchronism and the second immovable mirror (4).

**4.** The means as set forth in any of the claims 1 to 3, **characterized in that** one mirror (21) of the mirror array is movable along a curved path (8) connecting a horizontally oriented frame section (73) to a vertically oriented frame section (72).

**5.** The means as set forth in any of the claims 1 to 4, **characterized in that** the blackbody radiators or the blackbody radiator (10) and the Globar (9) are arranged immovably and a hinged plan mirror (17) as well as a parabolic mirror (18) are arranged so that in the one position of the plan mirror (17) the radiation of the one blackbody radiator (10) and in the other position of the plan mirror (17) the radiation of the other blackbody radiator (10) and of the Globar radiator (9) is directed into the beam path.

**6.** The means as set forth in any of the claims 1 to 5, **characterized in that** the infrared measuring instrument (6), the mirror array (1 to 5) and the radiators (9, 10) are rigidly connected mechanically to the frame (7).

**7.** A method for determining the transmissivity in making use of the means as set forth in any of the claims 1 to 6 **characterized in that**
with the engine cut off, the spectra $L_{KA}(\tilde{\nu})$ and $L_{HA}(\tilde{\nu})$ of a cold and a hot radiators are detected from which the parameters such as pressure, temperature, trace gas concentration as well as with blackbody radiators also their radiation temperature are computed as needed for determining the locally dependent spectra $L_{KA}(\tilde{\nu})$ and $L_{HA}(\tilde{\nu})$, and then
with the engine running, the spectra of the cold and the hot radiators are measured at various positions (*i*), the transmissivity $T_i(\tilde{\nu})$ is obtained by forming the relation

$$T_i(\tilde{\nu}) = \frac{L_{HT,i}(\tilde{\nu}) - L_{KT,i}(\tilde{\nu})}{L_{HA,i}(\tilde{\nu}) - L_{KA,i}(\tilde{\nu})} = \frac{\tau_{G,i}(\tilde{\nu})}{\tau_{atm,i}(\tilde{\nu})}$$

and therefrom the exhaust gas parameter, temperature, pressure, trace gas concentrations are determined, where $L_{KA,i}(\tilde{\nu})$ and $L_{HA,i}(\tilde{\nu})$ are the spectral radiation densities of the cold radiator K and of the hot radiator H with the engine cut off, (A)$L_{KT,i}(\tilde{\nu})$ and $L_{HT,i}(\tilde{\nu})$ are the spectral radiation densities of the exhaust gases with the engine running, (T), $\tilde{\nu}$ is the wave number, $\tau_{atm,i}(\tilde{\nu})$ the transmissivity of the one part of the atmosphere (atm), $\tau_{G,i}(\tilde{\nu})$ the transmissivity of the exhaust gases *(G)*, and *i* the spatial dependency or a spatially dependent mirror position.

## Revendications

**1.** Dispositif pour détecter les propriétés de rayonnement infrarouge des gaz d'échappement de moteurs à réaction ou de turbines, dans lequel aussi bien des mesures d'émission que des mesures de transmission sont effectuées à des intervalles de temps courts, avec un dispositif de miroirs alignés perpendiculairement à l'axe du jet d'échappement comportant plusieurs miroirs (1 à 5), **caractérisé en ce qu'**il est prévu deux corps noirs (10) ou un corps noir (10) et un globar (9), dont l'un est refroidi à une température inférieure à la température ambiante ou maintenu à la température ambiante pour des mesures d'émission et l'autre est chauffé à une température supérieure à la température des gaz d'échappement pour des mesures de transmission,
les miroirs (1 à 5), qui sont disposés dans un châssis (7, 71 à 74), sont déplaçables par paliers aussi bien verticalement qu'horizontalement dans des positions réglables et définies à l'aide de moteurs pas à pas dans un plan perpendiculaire à l'axe du jet d'échappement, le rayonnement des corps noirs (10) ou d'un corps noir (10) et du globar (9) étant dirigé à travers le gaz d'échappement,
le châssis (7, 71 à 74) installé dans une construction en portique (70) est déplaçable avec les miroirs (1 à 5) disposés dans celui-ci le long de l'axe du jet d'échappement (11), et il est prévu un appareil de mesure infrarouge (6) auquel sont amenés aussi bien le rayonnement des corps noirs (10) ou d'un corps noir (10) et du globar (9) que le rayonnement émis par le gaz d'échappement.

2. Dispositif selon la revendication 1, **caractérisé en ce que**, pour une détection verticale du rayonnement, deux miroirs (3, 4) sont installés dans une position fixe dans le châssis (7) et deux miroirs (1, 5) sont déplacés pas à pas, en synchronisme, à l'aide des moteurs pas à pas, le long de sections de châssis (71, 73) s'étendant horizontalement, de sorte que le rayonnement émis par les deux corps noirs (10) ou par le corps noir (10) et le globar (9) est amené à l'appareil de mesure infrarouge depuis un bord du jet d'échappement (11) jusqu'à son autre bord par l'intermédiaire des miroirs (1, 5) déplacés en synchronisme ainsi que par l'intermédiaire des miroirs (3, 4) fixes.

3. Dispositif selon la revendication 1, **caractérisé en ce que**, pour une détection horizontale du rayonnement, deux miroirs (1, 4) sont installés dans une position fixe dans le châssis (7) et deux miroirs (2, 3) sont déplacés pas à pas, en synchronisme, à l'aide des moteurs pas à pas, le long de sections de châssis (72, 74) s'étendant verticalement, de sorte que le rayonnement émis par les deux corps noirs ou par le corps noir (10) et le globar (9) est amené depuis un bord du jet d'échappement (11) jusqu'à son autre bord par l'intermédiaire du premier miroir fixe (1), du miroir déplacé en synchronisme (2, 3) et du deuxième miroir fixe (4).

4. Dispositif selon l'une des revendications 1 à 3, **caractérisé en ce qu'**un miroir (21) du dispositif de miroirs est déplaçable le long d'un chemin incurvé (8) raccordant une section de châssis (73) s'étendant horizontalement à une section de châssis (72) s'étendant verticalement.

5. Dispositif selon l'une des revendications 1 à 4, **caractérisé en ce que** les corps noirs ou le corps noir (10) et le globar (9)sont disposés dans une position fixe et un miroir plan (17) repliable ainsi qu'un miroir parabolique (18) sont disposés de telle manière que, dans une position du miroir plan (17), le rayonnement d'un corps noir (10) et, dans l'autre position du miroir plan (17), le rayonnement de l'autre corps noir ou du globar (9) est dirigé dans le chemin du rayonnement.

6. Dispositif selon l'une des revendications 1 à 5, **caractérisé en ce que** l'appareil de mesure infrarouge (6), le dispositif de miroirs (1 à 5) et les corps noirs (9, 10) sont raccordés rigidement par un moyen mécanique au châssis (7).

7. Procédé pour déterminer le degré de transmission en utilisant le dispositif selon les revendications 1 à 6, **caractérisé en ce que**, avec le mécanisme moteur arrêté, on enregistre les spectres $L_{KA,i}(\tilde{\nu})$ et $L_{HA,i}(\tilde{\nu})$ d'un radiateur de rayonnement froid ainsi que d'un radiateur de rayonnement chaud, à partir desquels les paramètres nécessaires pour déterminer des spectres dépendant du lieu $L_{KA,i}(\tilde{\nu})$ et $L_{HA,i}(\tilde{\nu})$, tels que la pression, la température, les concentrations de traces de gaz, ainsi que la température de rayonnement des corps noirs sont calculés, ensuite, avec le mécanisme moteur en fonctionnement, les spectres du radiateur de rayonnement froid et du radiateur de rayonnement chaud dans diverses positions (*i*) sont mesurés, le degré de transmission $T_i(\tilde{\nu})$ est déterminé par la formation du rapport

$$T_i(\tilde{\nu}) = \frac{L_{HT,i}(\tilde{\nu}) - L_{KT,i}(\tilde{\nu})}{L_{HA,i}(\tilde{\nu}) - L_{KA,i}(\tilde{\nu})} = \frac{T_{G,i}(\tilde{\nu})}{T_{atm,i}(\tilde{\nu})}$$

et à partir de celui-ci, les paramètres des gaz d'échappement, la température, la pression, les concentrations en traces de gaz sont déterminés, sachant que : $L_{KA,i}(\tilde{\nu})$ et $L_{HA,i}(\tilde{\nu})$ désignent les répartitions spectrales du radiateur de rayonnement froid K ainsi que du radiateur de rayonnement chaud H avec le mécanisme moteur arrêté (A), $L_{KT,i}(\tilde{\nu})$ et $L_{HT,i}(\tilde{\nu})$ désignent les densités spectrales de rayonnement du gaz d'échappement avec le mécanisme moteur arrêté (T), $(\tilde{\nu})$ le nombre d'ondes, $\tau_{atm,i}(\tilde{\nu})$ le degré de transmission d'une partie de l'atmosphère (atm), $\tau_{G,i}(\tilde{\nu})$ le degré de transmission du gaz d'échappement (G) et i la dépendance par rapport au lieu ou une position de miroir dépendant du lieu.

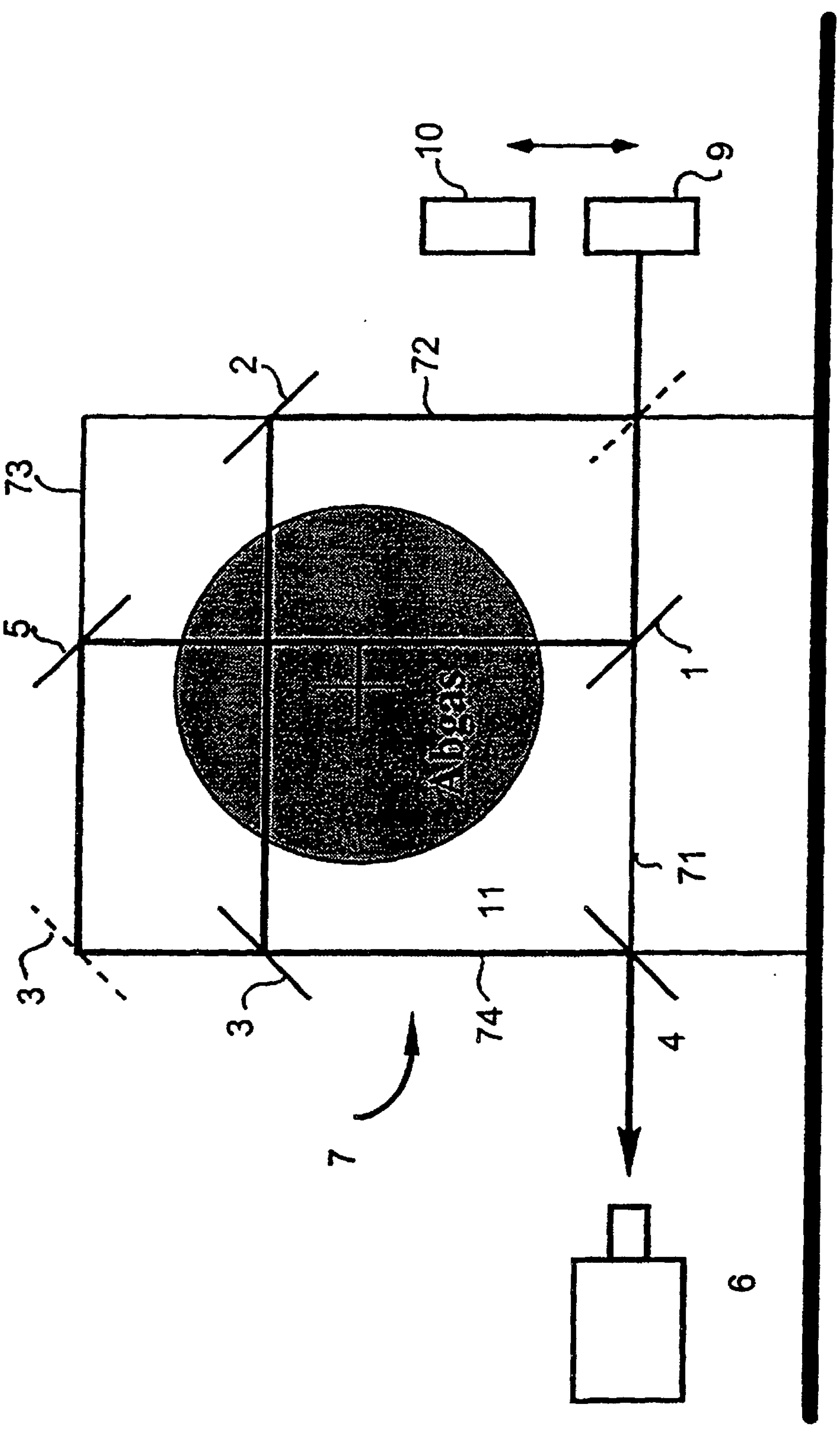


Fig.1

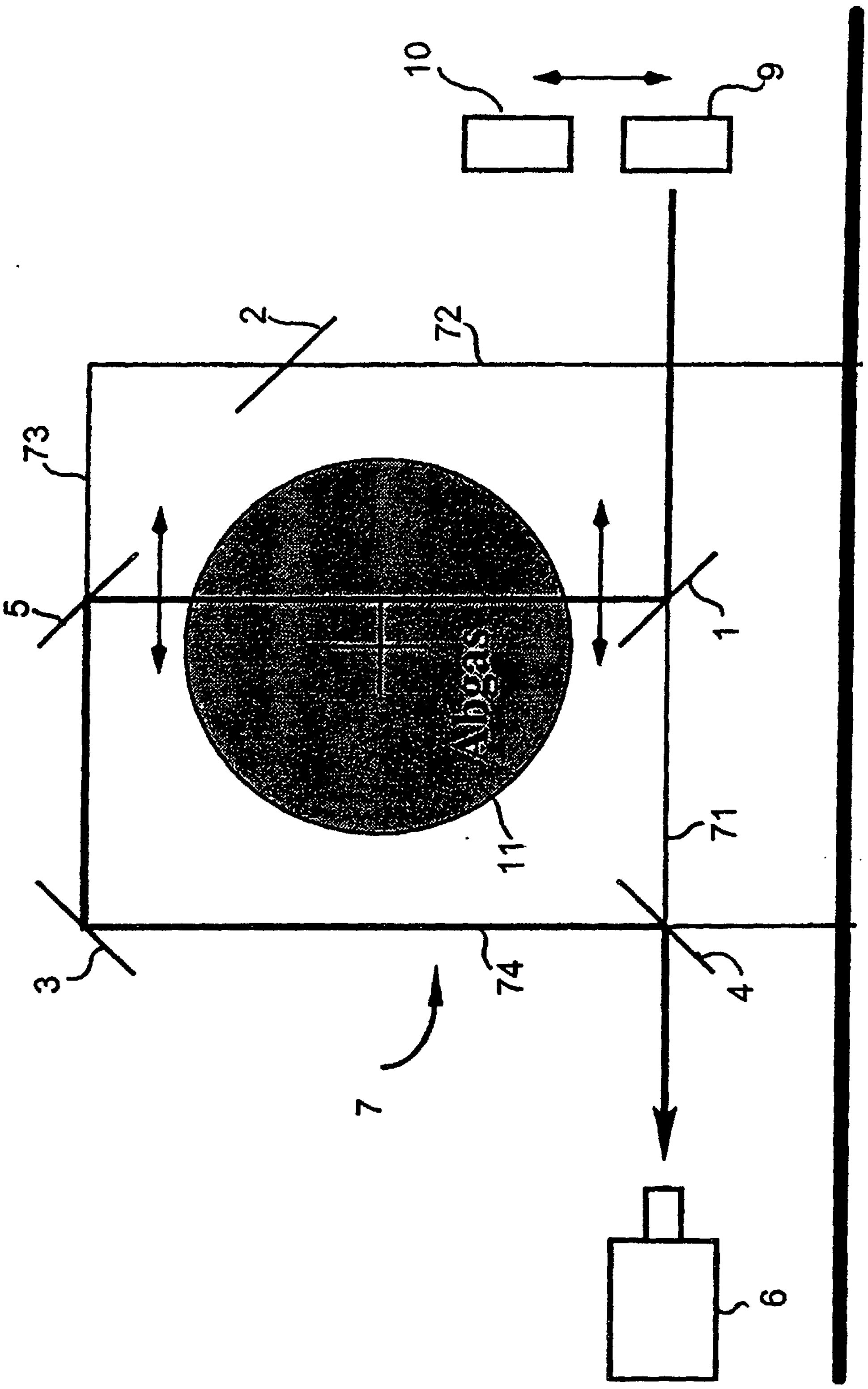


Fig.2

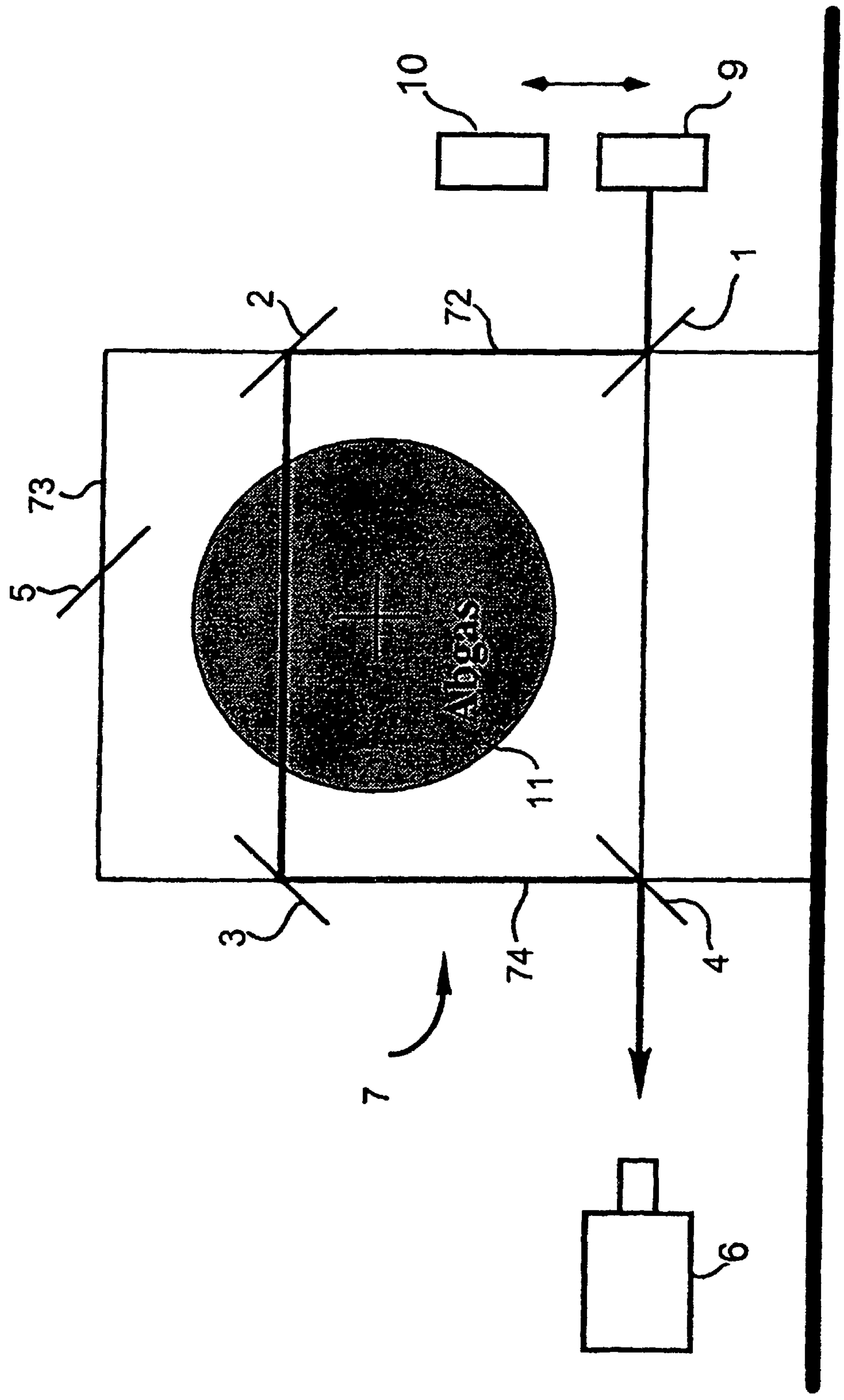


Fig.3

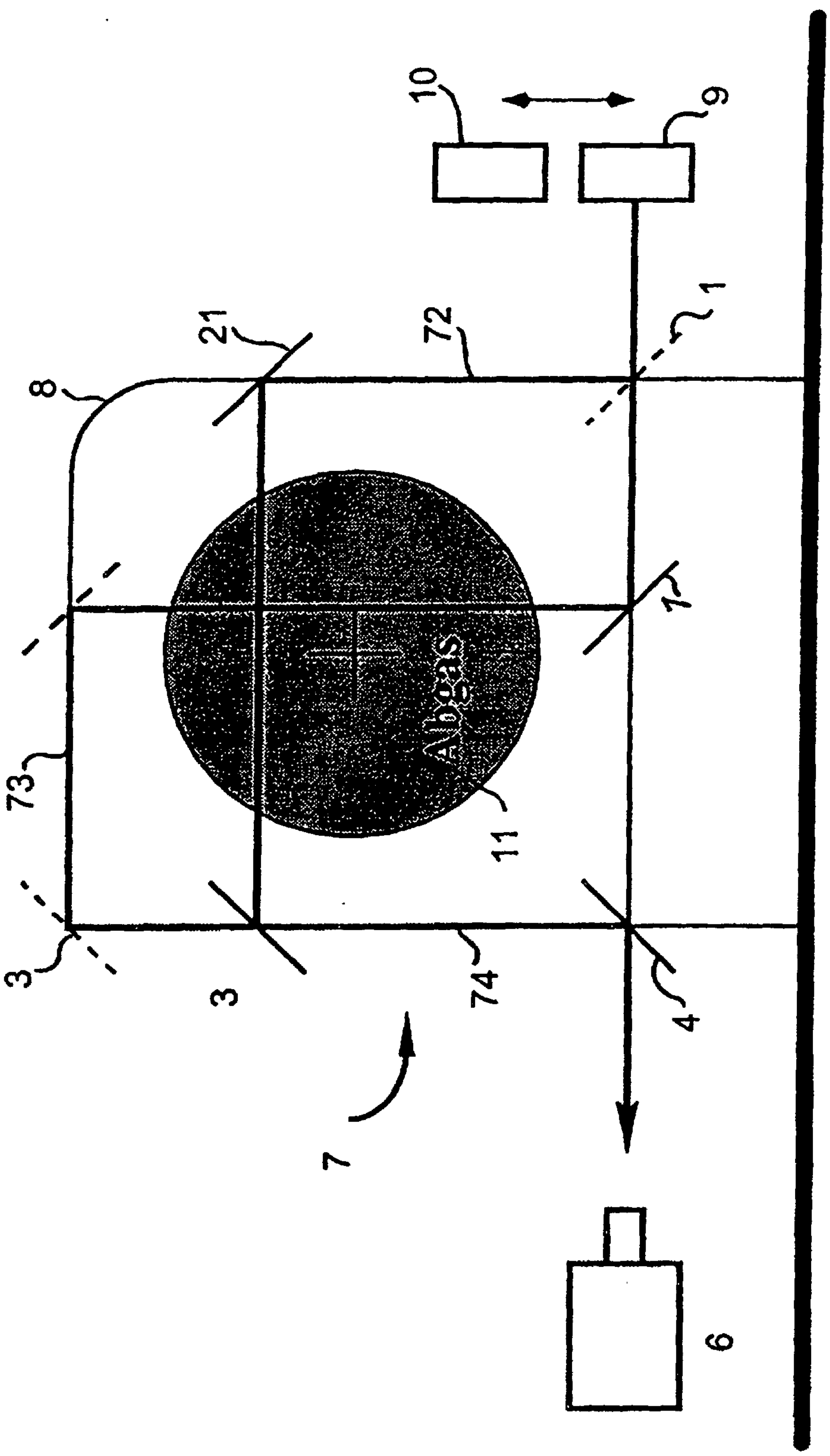


Fig.4

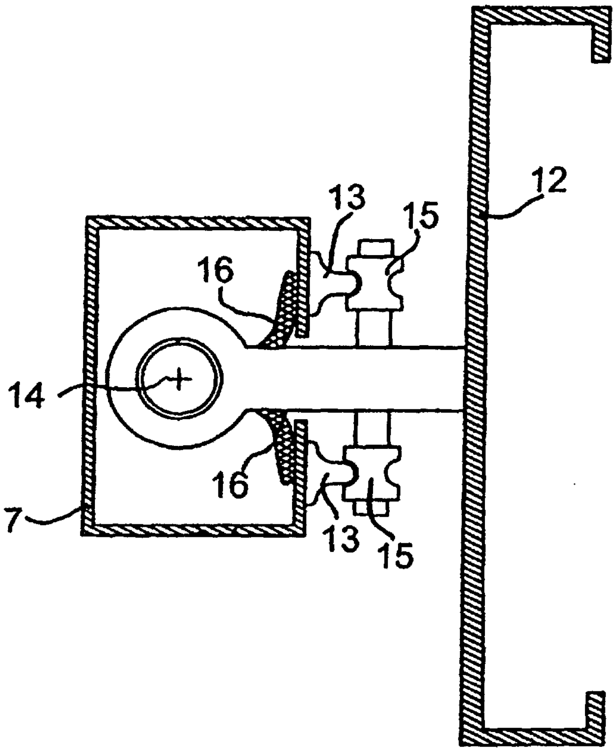


Fig.5

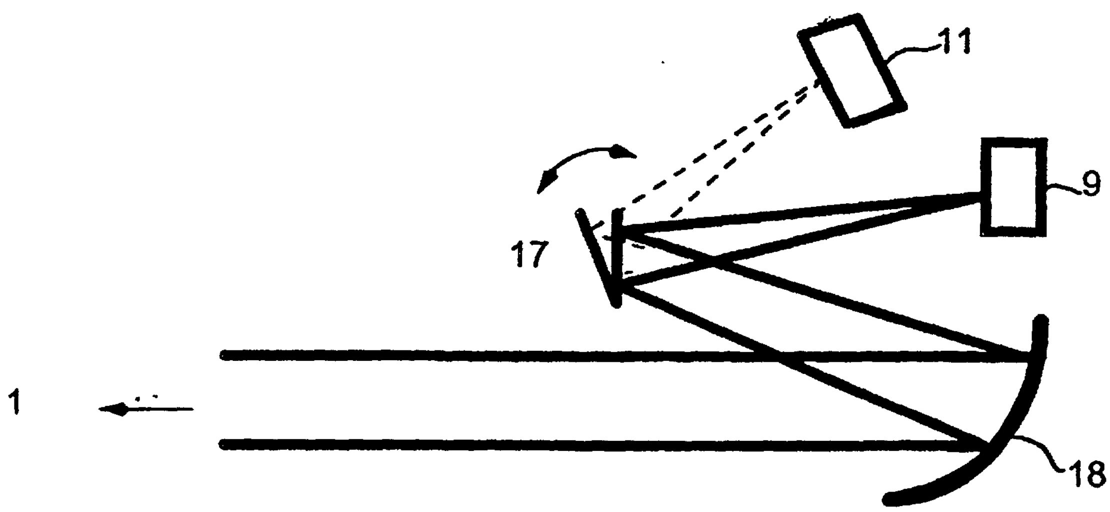


Fig.7

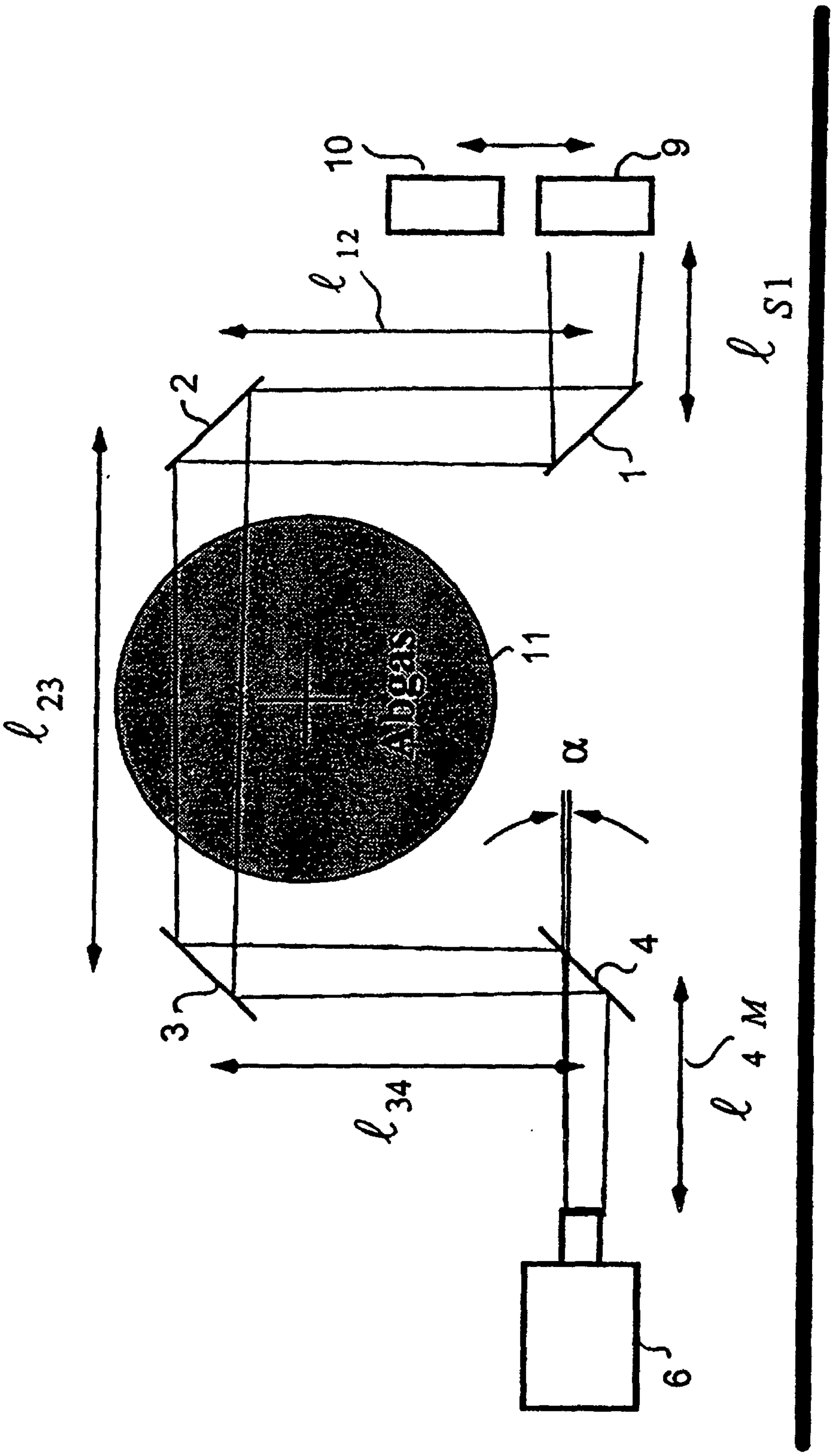


Fig.6

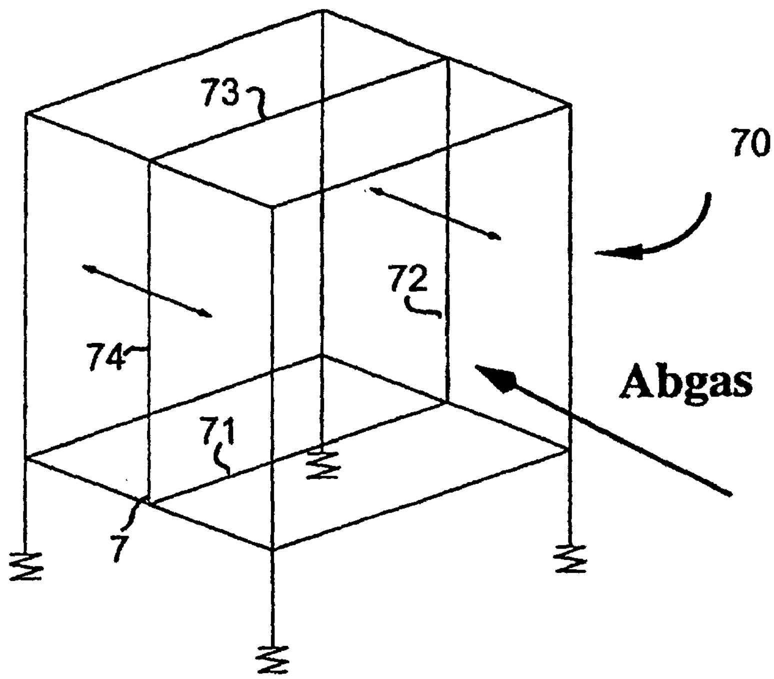


Fig.8

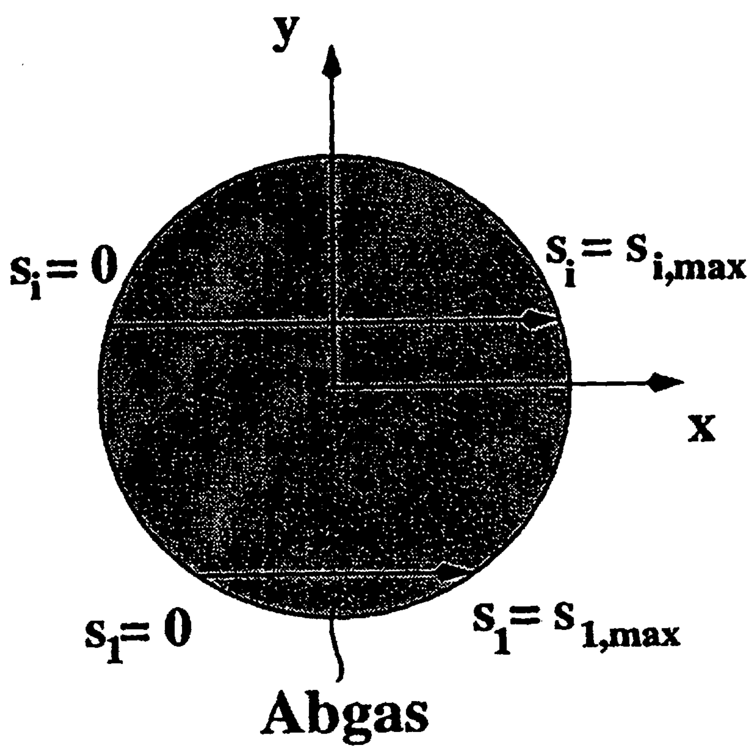


Fig.9